**Europäisches Patentamt**

**European Patent Office**

**Office européen des brevets**

(11) Veröffentlichungsnummer: **0 250 514 B1**

## (12) EUROPÄISCHE PATENTSCHRIFT

(45) Veröffentlichungstag der Patentschrift: **29.04.92**

(21) Anmeldenummer: **87900136.0**

(22) Anmeldetag: **20.12.86**

(86) Internationale Anmeldenummer:
**PCT/EP86/00769**

(87) Internationale Veröffentlichungsnummer:
**WO 87/03841 (02.07.87 87/14)**

(51) Int. Cl.5: **B32B 17/10**, C03C 27/12,
B29C 35/08, B29C 43/34,
B29C 43/20

---

(54) **VERFAHREN ZUR HERSTELLUNG EINER KUNSTSTOFFSCHICHT ZWISCHEN ZWEI GLASSCHEIBEN UND VORRICHTUNG ZUR DURCHFÜHRUNG DES VERFAHRENS.**

---

(30) Priorität: **21.12.85 DE 3545553**

(43) Veröffentlichungstag der Anmeldung:
**07.01.88 Patentblatt 88/01**

(45) Bekanntmachung des Hinweises auf die
Patenterteilung:
**29.04.92 Patentblatt 92/18**

(84) Benannte Vertragsstaaten:
**AT BE CH DE FR GB IT LI LU NL SE**

(56) Entgegenhaltungen:
**EP-A- 0 085 602**
**FR-A- 2 161 443**
**GB-A- 2 015 427**

(73) Patentinhaber: **UCB S.A.**
**Avenue Louise 326, Bte 7**
**B-1050 Bruxelles(BE)**

(84) Benannte Vertragsstaaten:
**BE CH DE FR GB IT LI LU NL SE AT**

(72) Erfinder: **HAHN, Thomas**
**Hanauer Landstr. 211**
**W-6000 Frankfurt/Main 1(DE)**

(74) Vertreter: **Reichel, Wolfgang, Dipl.-Ing. et al**
**Reichel und Reichel Parkstrasse 13**
**W-6000 Frankfurt am Main 1(DE)**

**Beschreibung**

Die Erfindung betrifft ein Verfahren und eine Vorrichtung zur Durchführung des Verfahrens zur Herstellung einer Kunststoffschicht zwischen zwei senkrecht oder schräg stehend angeordneten Glasscheiben, wobei zwischen die beiden an ihrem äußeren Rand parallel gehaltenen und abgedichteten Glasscheiben der Kunststoff in flüssiger Form eingefüllt wird und eine Aushärtung des Kunststoffs in Richtung des Anstiegs der Füllhöhe ausgeführt wird.

Verfahren und Vorrichtung zur Herstellung einer Kunststoffschicht zwischen zwei Glasscheiben sind bereits mehrfach bekannt. So wird in der DE-B- 22 26 342 ein Verfahren zur Herstellung eines Verbundglases mit zwei Glasscheiben und einer diese verbindenden Zwischenschicht aus einem gießfähigen, selbst aushärtenden, durchsichtigen Kunststoff beschrieben, wobei die beiden Glasscheiben mit einem diese nur an ihren Rändern trennenden, abdichtenden Abstandhalter in aufrechter Lage an eine kippbare Platte gelehnt werden und ihr Zwischenraum mindestens teilweise mit dem flüssigen Kunststoff gefüllt wird, woraufhin die Platte mit den beiden Glasscheiben langsam in Richtung auf die Waagerechte gekippt wird, wobei eine sich unter dem Druck des flüssigen Kunststoffes ergebende Ausbauchung der der Platte abgewandten Glasscheibe in deren aufrechter Lage zurückgebildet wird und dabei der Kunststoff den gesamten Zwischenraum zwischen den Glasscheiben ausfüllt, bis eine im Abstandhalter für die Entlüftung vorgesehene Öffnung verschlossen wird. Dabei kann die Rückbildung der Ausbauchung der Glasscheiben auch noch zusätzlich mit Hilfe eines Saugnapfes beeinflußt werden, welcher über einen Schlauch an einer Unterdruckquelle angeschlossen ist.

Weiterhin ist aus der DE-A- 27 28 762 ein Verfahren zur Herstellung einer Verbundglasscheibe bekannt, bei welchem der Zwischenraum zweier horizontal liegender, durch einen Abstandhalter voneinander parallel gehaltener Scheiben mit einem Kunststoff ausgefüllt wird. Maßnahmen zur Vermeidung der Ein- bzw. Ausbauchung der Scheiben in Folge des Druckes des eingefüllten Kunststoffes bzw. des Gewichts der oberen Scheibe werden in dieser Druckschrift nicht angesprochen.

Ein weiteres Verfahren zur Herstellung von Verbundglasscheiben wird in der DE-A- 26 06 569 beschrieben. Bei diesem Verfahren erfolgt das Einfüllen des Kunststoffes in den Zwischenraum zwischen beiden Glasscheiben in der Schräglage und die eigentliche Aushärtung in der horizontalen Lage.

Darüber hinaus ist aus der DE-C- 27 37 740 ein Verfahren zum Herstellen eines aus zwei Glasscheiben und einer Zwischenschicht bestehenden Verbundglases bekannt, bei dem ein bereits fertiger Kunststofffilm als diese Zwischenschicht zwischen die Glasscheiben geklebt wird und zur Vermeidung von Gasblasenbildung in der Klebschicht die Glasscheiben mittels drehbarer Rollen an den Kunststofffilm gepreßt werden. Dieses Verfahren zum Verbinden von Glasplatten und Zwischenschicht ist jedoch aufwendig und erfordert zudem einen bereits vorgefertigten Kunststofffilm.

In der CH-A- 574 371 ist eine schalldämmende Verglasung in Form eines Schichtkörpers aus zwei eine Kunststoffschicht umgebenden Glasscheiben beschrieben. Bei einem angegebenen Verfahren zur Herstellung eines solchen Schichtkörpers werden die Scheiben beim Einfüllen des Kunststoffes senkrecht in einen Wasserbehälter gestellt. In Abhängigkeit von Druckverhältnissen und Dicke der Scheiben wird mit unterschiedlicher Wasserspiegelhöhe gearbeitet, um ein Ausbauchen der Scheiben zu verhindern. Dieses Verfahren begrenzt nicht den hydrostatischen Druck, sondern kompensiert den stets ansteigenden, bei großen Scheiben enorm hohen hydrostatischen Druck durch hydrostatischen Gegendruck. Die Aufwendigkeit dieses Verfahrens, bedingt durch den großen druckstabilen Wassertank ist offensichtlich und bietet zudem keine Gewähr für die Planparallelität sich gegenüberliegender Scheiben, erschwert dadurch, daß bekannterweise freistehende Glasscheiben nicht völlig gerade sind.

Es sind schließlich aus der GB-A- 2 015 427 ein Verfahren und eine Vorrichtung der eingangs erwähnten Art bekannt, bei dem, bzw. der ein aushärtbarer flüssiger Kunststoff mit einer definierten Zufuhrgeschwindigkeit zwischen die beiden vorzugsweise vertikal angeordneten, an ihrem äußeren Rand parallel gehaltenen und abgedichteten Glasscheiben eingefüllt wird. Dabei ist die Zufuhrgeschwindigkeit des Kunststoffes so ausgewählt, daß sie der Aushärtung und Verfestigung des Kunststoffes fortschreitend entspricht, so daß unzulässige Verformungen, insbesondere Ausbauchungen der beiden Glasscheiben möglichst vermieden werden. Zwischen den beiden Glasscheiben sind Abstandshalter vorgesehen, die aus dem Zwischenraum zwischen den Scheiben herausgezogen werden, der entsprechend mit aushärtbarer Flüssigkeit aufgefüllt wird. Die Aushärtung soll so fortschreiten, daß der ausgehärtete Kunststoff dem hydrostatischen Druck des ungehärteten Kunststoffs jeweils widersteht. Andererseits ergibt sich bei diesem Verfahren und dieser Vorrichtung ein ganz anderes Problem, daß sich nämlich die Glasscheiben nach der einen Seite oder der anderen Seite durchbiegen, wodurch die herzustellende Kunststoffschicht auch sehr ungleichmäßig werden könnte. Dies ergibt sich aufgrund des Gewichtes der Scheiben, insbesondere bei großen Scheiben mit großen Abmessungen in vertikaler Richtung, wobei die Durchbiegung der beiden Scheiben in einer Richtung oder auch in entgegegesetzten Richtungen erfolgen kann, wobei die beiden Scheiben im wesentlichen parallel zueinander beiben. Um solche Durchbiegungen und damit die Herstellungsungenauigkeit für die Schicht zwischen den beiden Scheiben zu vermindern, werden zwei einander gegenüberliegende Rollen verwendet, die an der Vorderseite und der Rückseite der beiden Glasscheiben nach oben oder unten in der Höhe dorthin bewegt werden können, wo die Durchbiegung am meisten korrigiert werden muß. Die sich ergebende Kunststoffschicht zeigt über ihre Höhe weniger bleibende Durchbiegungen.

Demgegenüber liegt der Erfindung die Aufgabe zugrunde, das eingangs erwähnte Verfahren und die eingangs erwähnte Vorrichtung so zu gestalten, daß mit einfachen Mitteln eine Ausbauchung der beiden Glasscheiben bei der Herstellung praktisch vermieden werden kann.

Diese Aufgabe wird durch die Merkmale der kennzeichnenden Teile des Anspruchs 1 bzw. der Ansprüche 10 und 11 gelöst.

Durch das erfindungsgemäße Verfahren werden Füll- und Aushärtevorgang zusammengelegt, woduch eine Vielzahl von technischen Problemen, wie sie z. B. beim Aufrechtstellen der Scheiben für ein gutes Einfließen des Kunststoffes und zur Vermeidung von Luftblaseneinschlüssen auftreten, überwunden werden. Beim erfindungsgemäßen Füll- und Aushärtevorgang wird auch bei Senkrechtstellung in der Flüssigekeit kein hoher statischer Druck aufgebaut, der den notwendigerweise weichen Randverbund zerstören und ein Ausbauchen der Scheiben verursachen würde. Die Herstellung von gleichmäßig dicken Scheiben von sehr großen Abmessungen wird sichergestellt. Ein Ablösen der fertiggestellten Kunststoffscheibe von den Glasscheiben ist unproblematisch, wenn ein sich nicht mit Glas verbindender Kunststoff verwendet wird oder die Glasscheibeninnenseite vor dem Einfüllvorgang mit entsprechenden Trennmitteln versehen werden. Insbesondere bietet das erfindungsgemäße Verfahren die Möglichkeit der kombinierten Herstellung sehr langer Kunststoffschichten. Auch sind insbesondere Verbundglasscheiben mit dem erfindungsgemäßen Verfahren einfach und mit hoher Qualität herstellbar. Bis zu jeder beliebigen Füllhöhe sind einwandfreie und luftblasenfreie Kunststoffschichten herstellbar.

Die schnell erfolgende Aushärtung des Kunststoffes ermöglicht es, daß während des Eingießens die Andruckvorrichtungen bzw. -vorrichtungen die Scheiben auf dem exakten Abstand halten, eine schnelle Polymerisation des Kunststoffes eingeleitet wird und der sich nun verfestigende Kunststoff keine Fließeigenschaften mehr hat, die ein Ausbauchen der Scheiben verursachen würden. Zu diesem Zweck kann man das Scheibenpaar auf einer festen Unterlage senkrecht oder schräg positionieren und einseitig beispielsweise mittels einer Rollen- oder Walzenbann den gleichmäßigen Abstand während des Füllvorganges kontrollieren. Bei einer vorzugsweise senkrecht stehenden Scheibe können auch einander gegenüber angeordnete Andruckvorrichtungen entsprechend dem Füllvorgang mitgeführt werden, wodurch beispielsweise auch das Befüllen gebogener Scheiben ermöglicht wird. Das erfindungsgemäße Verfahren ermöglicht auch eine sandwichartige Anordnung aus mehr als zwei Glasscheiben mit einstellbaren Abständen.

Die erfindungsgemäße Vorrichtung ist einfach und erfordert lediglich weitgehend beliebige Andruckvorrichtungen und eine Einrichtung zum Bewegen dieser Andruckvorrichtungen und/oder der Scheiben, um die Relativbewegung zwischen Scheiben und Andruckvorrichtungen zu bewirken.

Es kann vorteilhaft sein, die Glasscheibenanordnung während des Herstellungsprozesses schräg zu halten, wobei der statische Druck vermindert ist, und die Gesamthöhe der Anlage auch bei großen Scheiben auf ein niedrigeres Maß reduziert wird.

Vorteilhafte Weiterbildungen der Erfindung sind in den Unteransprüchen angegeben.

Eine Weiterbildung der Erfindung besteht darin, daß eine oder mehrere Strahlungsquellen zusammen mit der Andruckvorrichtung bzw. den Andruckvorrichtungen bewegbar sind. Je nach Empfindlichkeit des zu bestrahlenden Materials und dessen Materialdicke kann durch Einschalten von mehreren Lichtquellen, die jeweils zwischen Teilen der Andruckvorrichtung bzw. -vorrichtungen angeordnet sind, die Aushärtgeschwindigkeit bestimmt werden.

Eine Weiterbildung der Erfindung besteht darin, daß das Einfüllen des Kunststoffes entsprechend der Bewegungsgeswindigkeit der Andruckvorrichtung bzw. Andruckvorrichtungen erfolgt, wobei diese jeweils im bereich der Flüssigkeitsoberfläche des Kunststoffes geführt werden. Dies erlaubt bei gleichmäßiger Geschwindigkeit von Andruckvorrichtung bzw. Andruckvorrichtungen und Lichtquellen, daß nur die Zuflußgeschwindigkeit des Kunststoffes geregelt werden muß.

Eine Weiterbildung der Erfindung besteht darin, daß das Einfüllen des Kunststoffes und die Bewegung der Andruckvorrichtung bzw. -vorrichtungen derart erfolgt, daß sich die Andruckvorrichtungen immer im Bereich der Flüssigkeitsoberfläche des Kunststoffes befinden. Hierbei geht man vor einer konstanten Füllgeschwindigkeit aus und paßt die Geschwindigkeit der Andruckvorrichtungen bzw. -

vorrichtungen und Bestrahlungsbahn der Flüssigkeitsoberfläche des Kunststoffes an. So wird beispielsweise bei gleichmäßig zugeführter Flüssigkeitsmenge die Füllgeschwindigkeit halbiert, wenn der Scheibenzwischenraum verdoppelt wurde.

Eine Weiterbildung der Erfindung besteht darin, daß der Kunststoff durch Wärme aushärtbar ist und daß die Wärmezufuhr über die Andruckvorrichtung bzw. -vorrichtungen erfolgen kann. Diese Wärmezufuhr muß nicht durch intensive Bestrahlung hervorgerufen werden, sondern ein beispielsweise in einer Walze eingebautes Mikrowellengerät, welches gegebenenfalls hin- und hereilt, kann, ohne das Glas zu erwärmen, eingegossene Materialien schnell erwärmen und einen Aushärteprozeß einleiten.

Eine Weiterbildung der Erfindung besteht darin, daß die Andruckvorrichtung bzw. Andruckvorrichtungen über die gesamte Glasscheibenbreite reichen.

Eine Weiterbildung der Erfindung besteht darin, daß die Strahlunsquelle zwischen zwei nebeneinanderliegenen Andruckvorrichtungen angeordnet ist, was ermöglicht, daß im Bereich des noch völlig flüssigen Kunststoffes die Scheibe von einer Andruckvorrichtung in Position gehalten wird, dann von beispielsweise einer intensiven UV-Strahlung getroffen wird, dann wieder eine Andruckvorrichtung folgt und unter Umständen danach wieder eine intensive Bestrahlung, wieder eine Andruckvorrichtung, usw. Abhängig ist dies von der Füllgeschwindigkeit, der erforderlichen Strahlungsintensität, der Strahlungsstärke der Lampen, sowie der Zeit, die der eingegossene Kunststoff benötigt, um seine Fließeigenschaft zu verlieren.

Eine Weiterbildung der Erfindung besteht darin, daß die Andruckvorrichtungen und die Strahlungsquelle nicht beweglich, sondern stationär angebracht sind und die Scheibeneinheit schräg bzw. senkrecht hindurchgeführt wird. So kann beispielsweise fortlaufend produziert werden, indem jeweils Scheibenpaar nach Scheibenpaar durch die Positionier- und beispielsweise Bestrahlungsstation geführt wird.

An die Art der verwendeten Andruckvorrichtungen sind keine besonderen Anforderungen gestellt. So können neben Walzen oder Rollen auch flüssigkeitsgefüllte Schläuche verwendet werden, die eine oberflächenschonendere Wirkung zeigen. Um ein Verkratzen der Glasflächen zu vermeiden, ist es jedoch auch ohne weiteres möglich, eine Schutzscheibe oder -folie zwischen Andruckvorrichtungen und Glasscheiben vorzusehen.

Wahlweise können die Andruckvorrichtungen auch mit pneumatischen, hydraulischen oder mechanischen (Federwirkung) Regeleinrichtungen versehen werden, die einen exakten Druckausgleich bei der Führung der Andruckvorrichtungen über die gesamte Scheibenausdehnung bewirken.

Auch ist es möglich, luftkissenausbildende Aggregate relativ zu den Scheiben zu bewegen, wobei deren Oberfläche durch die berührungsfreie Andruckwirkung in keiner Weise geschädigt wird.

Eine Weiterbildung der Erfindung besteht darin, daß außer einkomponentigen Kunststoffen auch die Möglichkeit besteht, mehrkomponentige Materialien zu verarbeiten. Sofern sich bei Einfüllen des Materials im Scheibenzwischenraum Triefnasen bilden, besteht die Möglichkeit, die einzubringende Flüssigkeit mittels dünnem Schlauch, beispielsweise Wursthaut, im Scheibenzwischenraum jeweils bis zum oberen Flüssigkeitsspiegel zu führen und diesen dann fortlaufend mit der Füllhöhe nach oben oder schräg hinten hinauszuschleppen. Bei den derzeit vielfach verwandten Gießharzen, die kurz vor dem Befüllen gemischt werden, besteht ein Verhältnis von Topfzeit zu Aushärtezeit von ca. 1 : 10. So ist beispielsweise anhand einer Mischanlage denkbar, daß eine Topfzeit von 30 Sekunden ausgenutzt wird, um von der Dosiereinheit durch den Schlauch in den Scheibenzwischenraum bis zur Kunststoffoberfläche zu gelangen. Innerhalb von fünf Minuten ist dann hier eine Verhärtung eingetreten, stark genug, um die Fließfähigkeit des Materials mindestens zu unterbinden. Bei einer Höhe der Andruckvorrichtung von etwa 1 m kann somit eine Glashöhe von ca. 3 m in 15 Minuten befüllt werden. Bei den derzeit üblichen Hüttenbandmaßen in der Floatglasherstellung von 6 m x 3,21 m ergäbe dies eine Produktionsmöglichkeit von ca. 80 m$^2$ per Stunde. Bei den derzeitigen Herstellungsmethoden benötigt man, um eine Scheibe von 6 x 3,21 m herzustellen, eine sehr umfangreiche Maschinerie und insbesondere sehr viel Platz. Ein wesentlicher Vorteil der Erfindung ist, daß die oben genannte Produktion auf einer Grundfläche von beispielsweise nur 10 bis 15 m$^2$ möglich ist. Die erforderliche Hallenhöhe von in diesem Fall - ohne Ausschachtung - ca. 4 m ist in glasverarbeitenden Betrieben im Regelfall vorhanden.

Eine Weiterbildung der Erfindung besteht darin, daß die senkrecht oder schräg stehend angeordnete Scheibe vor dem Einbringen des flüssigen Kunststoffs mit präparierter Luft oder einem anderen Gas gefüllt werden kann, das dann durch die einfließende und aufsteigende Flüssigkeit verdrängt wird. Auf diese Weise läßt sich - je nach Wunsch - die Vernetzung zwischen Kunststoff und Glas verbessern bzw. verschlechtern.

Eine Weiterbildung der Erfindung besteht darin, daß die Glasscheibe und das einzubringende flüssige Kunststoffmaterial unterschiedliche Temperaturen haben. Wird beispielsweise der einzubringende Kunststoff erwärmt, so bildet sich unmittelbar an der Oberkante der Flüssigkeitssäule ein Niederschlag an der Glasoberfläche, der der Haftung des Kunststoffs am Glas entgegenwirkt.

Die Erfindung wird im folgenden an Hand der Zeichnungen näher erläutert. Dabei zeigen:

FIG. 1 ein Ausführungsbeispiel der erfindungsgemäßen Vorrichtung,

FIG. 2 ein weiteres Ausführungsbeispiel der erfindungsgemäßen Vorrichtung und

FIG. 3 ein Ausführungsbeispiel der erfindungsgemäßen Vorrichtung, bei dem mehrere Walzen und Strahlungsquelen vorgesehen sind.

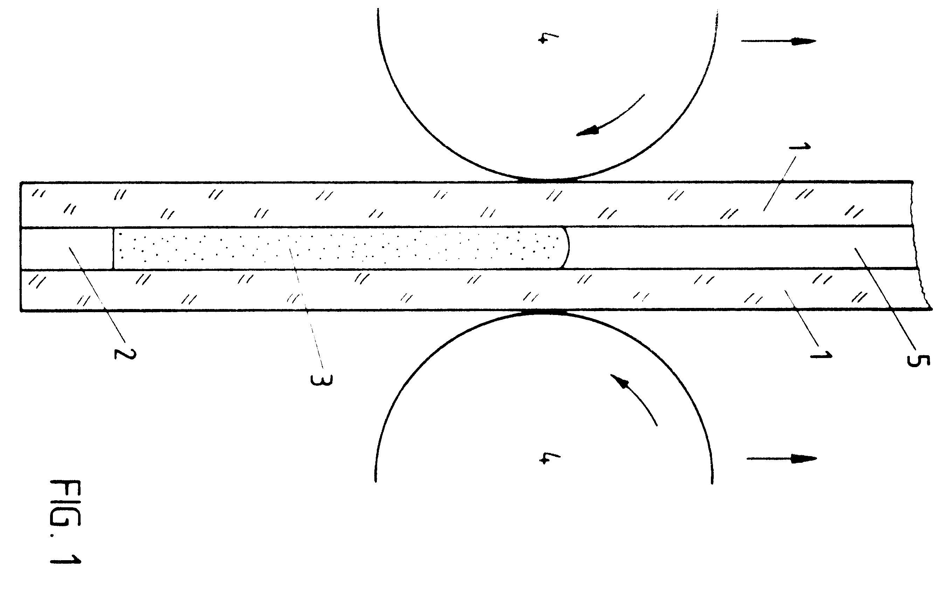

FIG. 1 zeigt eine senkrecht positionierte Scheibeneinheit aus zwei Glasscheiben 1, 1 mit Abstandstück 2, die durch davor- und dahinterlaufende Andruckvorrichtungen 4,4 in Form von Walzen 4' in Position gehalten werden, wenn flüssiger Kunststoff 3 in ihren Zwischenraum 5 gefüllt wird. Insbesondere bei der senkrechten Anordnung ist es möglich, auch Scheibeneinheiten von mehr als zwei Scheiben 1 gleichzeitig herzustellen, wobei die Scheibenzwischenräume mit flüssigem Kunststoff 3 gleichzeitig zu befüllen sind, was beispielsweise bei unterschiedlichen Scheibenahständen besondere Beachtung erfordert. Hält man den Flüssigkeitsspiegel immer etwas oberhalb der Walzen 4', so werden die Scheiben durch den statischen Druck gleichmäßig gegen die Walzen 4' gedrückt. Mehrfachscheiben können aber auch Zug um Zug hergestellt werden, indem jeweils eine neue Scheibe aufgelegt wird und der Abstand der Haltevorrichtungen zueinander vergrößert wird.

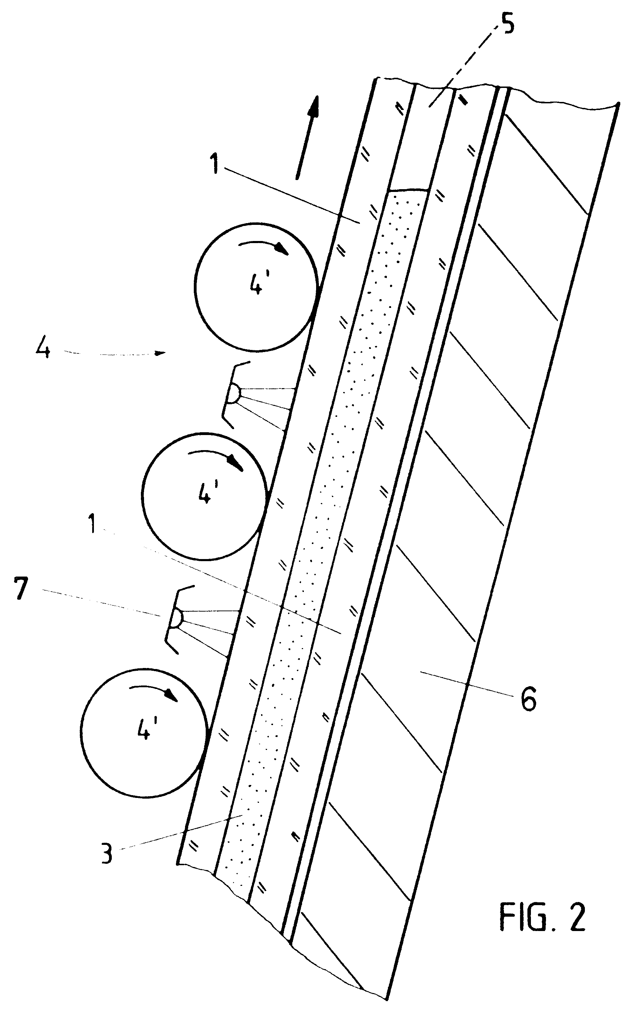

FIG. 2 zeigt einen Tisch 6, auf dem die Scheibeneinheit ruht, und gleichlaufend mit dem Füllvorgang wird die Rollenbahn mit einer Strahlungsquellen 7 aufweisenden Aushärteeinrichtung über die Glasfläche geführt. Während des Füllens kann dieser Tisch 6 senkrecht oder in einer Schräglage positioniert werden abhängig vom Fließverhalten des Kunststoffes, der Schichtdicke oder beispielsweise auch der zur Verfügung stehenden Raumhöhe. Bei schräg positioniertem Tisch 6 hängt die obere Scheibe durch, was leicht kompensiert werden kann, indem man den Füllungsgrad der Scheibe etwas höher hält als die mitlaufende Walzen- und Bestrahlungseinheit 4',7, wobei der statische Druck die obere Scheibe gegen das darüberlaufende Rollenwerk drückt, und eine optimale gleichmäßige Dicke somit gewährleistet ist. Entgegen den herkömmlichen Methoden braucht hier die Füllmenge nicht vorher präzise bestimmt zu werden, sondern es weist der voll gefüllte Zwischenraum 5 darauf hin, daß das Füllen beendet werden kann.

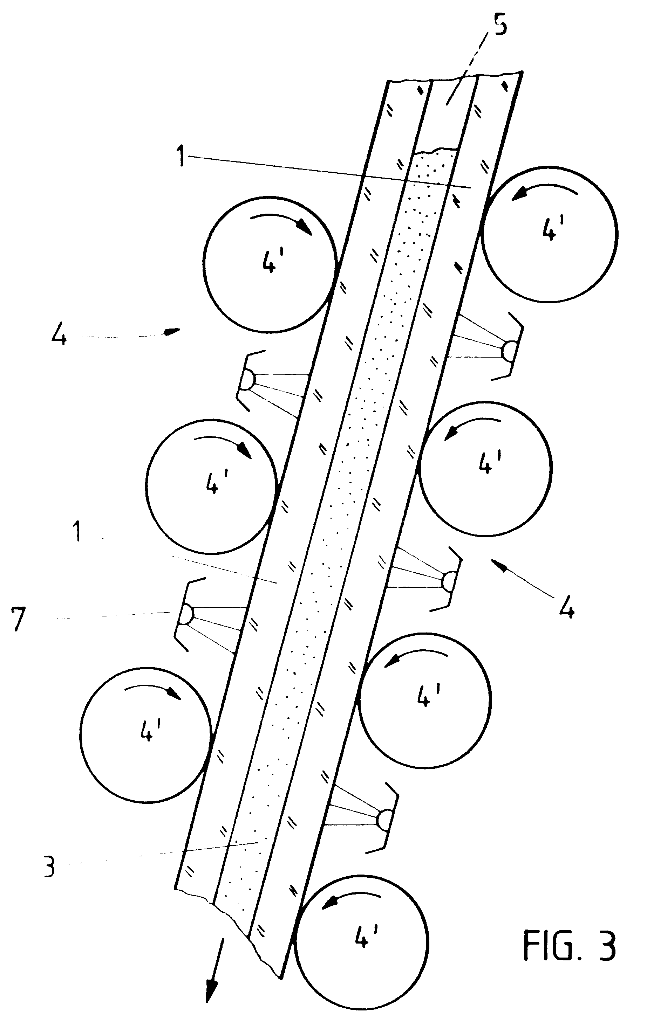

FIG. 3 zeigt eine stationäre Walzen- und Bestrahlungseinheit 4',7, durch die die Scheiben während ihres Füllvorganges hindurchgeführt werden. Eine senkrechte oder schräge Stellung dieser Einheit wird je nach Konsistenz des flüssigen Kunststoffes eingestellt.

In diesem letzten Ausführungsbeispiel wird im Gegensatz zu den Ausführungsbeispielen der FIG. 1 und 2 keine Einrichtung zum Bewegen der Andruckvorrichtung 4 benötigt. Statt dessen muß eine Bewegungseinrichtung zum Verschieben der Scheibeneinheit vorgesehen werden. Da beide Bewegungseinrichtungen in beliebiger Weise ausgebildet sein können, ist auf ihre Darstellung verzichtet worden.

Die Ausführungsbeispiele wurden für die Verwendung von Walzen 4' als Andruckvorrichtungen 4 erläutert. In der Praxis haben sich inzwischen jedoch auch drehbar gelagerte Rollen bewährt. Auch sind durchaus eine Reihe von andersartigen Andruckvorrichtungen, wie z. B. die eingangs erwähnte, denkbar, ohne daß die erfindungsgemäße Vorrichtung in ihrer vorteilhaften Wirkung geschmälert würde.

**Patentansprüche**

1. Verfahren zur Herstellung einer Kunststoffschicht (3) zwischen zwei senkrecht oder schräg stehend angeordneten Glasscheiben (1), wobei zwischen die beiden an ihren äußeren Rand Parallel gehaltenen und abgedichteten Glasscheiben (1) der Kunststoff in flüssiger Form eingefüllt wird und eine Aushärtung des Kunststoffs in Richtung des Anstiegs der Füllhöhe ausgeführt wird,
**dadurch gekennzeichnet,**
daß die Scheiben (1) durch den hydrostatischen Druck des flüssigen Kunststoffs gegen Andruckvorrichtungen (4,4;4,6) gedrückt werden und daß mindestens eine Andruckvorrichtung (4) mit der Aushärtezone des Kunststoffs (3) zu den Glasscheiben (1) eine Relativbewegung ausführt.

2. Verfahren nach Anspruch 1 für eine durch intensive Strahlung einer Strahlungsquelle aushärtbaren Kunststoff,
**dadurch gekennzeichnet**,
daß eine oder mehrere Strahlungsquellen (7) zusammen mit der Andruckvorrichtung (4) bzw. den Andruckvorrichtungen (4,4) bewegt werden.

3. Verfahren nach einem der Ansprüche 1 und 2,
**dadurch gekennzeichnet**,
daß bei vorgegebener Bewegungsgeschwindigkeit der Andruckvorrichtung bzw. -vorrichtungen (4;4,4) die Einfüllgeschwindigkeit des Kunststoffes an diese angepaßt wird.

**4.** Verfahren nach einem der Ansprüche 1 und 2, **dadurch gekennzeichnet,** daß bei vorgegebener Einfüllgeschwindigkeit des Kunststoffes die Bewegungsgeschwindigkeit der Andruckvorrichtung bzw. Andruckvorrichtungen (4;4,4) an diese angepaßt wird.

**5.** Verfahren nach Anspruch 1, **dadurch gekennzeichnet,** daß der Kunststoff (3) durch Wärme aushärtbar ist und daß die Wärmezufuhr über die Andruckvorrichtung bzw. Andruckvorrichtungen (4;4,4) erfolgt.

**6.** Verfahren nach Anspruch 1,2 oder 5, **dadurch gekennzeichnet,** daß die Andruckvorrichtung bzw. Andruckvorrichtungen (4;4,4,) und/oder die Strahlungsquellen (7) nicht bewegt werden und stationär sind und die Scheiben (1) schräg bzw. senkrecht durch die Anordnung aus Andruckvorrichtung bzw. -vorrichtungen geführt werden.

**7.** Verfahren nach einem der vorhergehenden Ansprüche, **dadurch gekennzeichnet,** daß die Flüssigkeit in den Zwischenraum zwischen den Scheiben (1) mit Hilfe eines mitgeführten Schlauches im Bereich des oberen Flüssigkeitsspiegels eingeführt wird, ohne vorher die Glasscheiben (1) zu benetzen.

**8.** Verfahren nach einem der vorhergehenden Ansprüche, **dadurch gekennzeichnet,** daß in einem Herstellungsschritt auch mehrere Schichten zwischen mehreren hintereinander angeordneten Scheiben zur Bildung einer Vielfachverbundglasscheibe hergestellt werden.

**9.** Verfahren nach einem der vorhergehenden Ansprüche, **dadurch gekennzeichnet,** daß nach Herstellung einer oder mehrerer Kunststoffschichten zwischen zwei bzw. mehr Glasscheiben eine oder mehrere weitere Kunststoffschichten zu einer oder mehreren weiteren Glasscheiben bzw. Verbundglasscheiben hergestellt werden.

**10.** Vorrichtung zur Durchführung des Verfahrens nach einem der Ansprüche 1 bis 9, **dadurch gekennzeichnet,** daß auf beiden Seiten der Scheiben (1) bewegbare Andruckvorrichtungen (4,4) vorgesehen sind und daß eine Einrichtung zur Relativbewegung der Andruckvorrichtungen (4,4) und/oder der Scheiben (1) mit einstellbarer Geschwindigkeit vergesehen ist.

**11.** Vorrichtung zur Durchführung des Verfahrens nach einem der Ansprüche 1 bis 9, **dadurch gekennzeichnet,** daß auf einer Seite der Scheiben (1) eine bewegbare Andruckvorrichtung (4) vorgesehen ist, und daß eine Einrichtung zur Relativbewegung der Andruckvorrichtung (4) mit einstellbarer Geschwindigkeit vorgesehen ist.

**12.** Vorrichtung nach Anspruch 10 oder 11, **dadurch gekennzeichnet,** daß die Andruckvorrichtung bzw. -vorrichtungen (4:4,4) über die gesamte Glasscheibenbreite reichen.

**13.** Vorrichtung nach einem der Ansprüche 10 bis 12, mit mindestens einer bewegbaren Strahlungsquelle, **dadurch gekennzeichnet,** daß die oder mehrere Strahlungsquellen (7) zwischen zwei oder mehreren Walzen (4') der Andruckvorrichtungen (4,4) angebracht sind.

**14.** Vorrichtung nach einem der Ansprüche 10 bis 12, **dadurch gekennzeichnet,** daß in der oder den Andruckvorrichtungen (4,4) eine Wärmequelle vorgesehen ist.

**15.** Vorrichtungen nach einem der vorhergehenden Ansprüche, **dadurch gekennzeichnet,** daß die Andruckvorrichtungen (4,4) drehbare gelagerte Walzen (4'), Rollen oder flüssigkeitsgefüllte flexible Schläuche sind, die wahlweise hydraulisch, pneumatisch oder mechanisch in ihrer Andruckwirkung regelbar sind, oder daß die Andruckvorrichtungen (4,4) Luftkissen ausbildende Aggregate aufweisen.

## Claims

**1.** A method of producing a layer (3) of plastics material between two glass panes (1) arranged in a vertical or inclined position, wherein the plastics material is fed in liquid form between the two glass panes (1) maintained parallel and sealed at their outer edges, and a curing of the plastics material is effected in the rising direction of the filling level, characterized in that the panes (1) are pressed against pressure devices (4, 4; 4, 6) by means of the hydrostatic pressure of the liquid plastics material, and that at least one pressure device (4) performs a movement relative to the panes with the curing zone of the plastics material (3).

2. A method according to claim 1 for a plastics material curable by intense radiation of a radiation source, characterized in that one or a plurality of radiation sources (7) are moved together with the pressure device (4) or the pressure devices (4, 4).

3. A method according to one of claims 1 and 2, characterized in that, with a given rate of movement of the pressure device or pressure devices (4; 4, 4), the feed rate of the plastics material is matched thereto.

4. A method according to one of claims 1 and 2, characterized in that, with a given feed rate of the plastics material, the rate of movement of the pressure device or pressure devices (4; 4, 4) is matched thereto.

5. A method according to claim 1, characterized in that the plastics material (3) is curable by heat and that the heat is supplied via the pressure device or pressure devices (4; 4, 4).

6. A method according to claim 1, 2 or 5, characterized in that the pressure device or pressure devices (4; 4, 4) and/or the radiation sources (7) are not moved and are stationary and that the panes (1) are moved in vertical or inclined position through the assembly of pressure device or pressure devices.

7. A method according to one of the preceding claims, characterized in that the liquid is fed into the space between the panes (1) in the region of the upper liquid level by means of a hose moved along therewith, without wetting the glass panes (1) in advance.

8. A method according to one of the preceding claims, characterized in that a plurality of layers between a plurality of glass panes, which are arranged one behind the other, are produced in one production step for forming a multiple laminated glass pane.

9. A method according to one of the preceding claims, characterized in that, after having produced one or a plurality of layers of plastics material between two or more glass panes, one or a plurality of further layers of plastics material are formed to one or a plurality of glass panes or laminated glass panes.

10. Apparatus for carrying out the method according to one of claims 1 to 9, characterized in that movable pressure devices (4, 4) are arranged on both sides of the panes (1) and that a device is provided for relative movement of the pressure devices (4, 4) and/or of the panes (1) at an adjustable rate.

11. Apparatus for carrying out the method according to one of claims 1 to 9, characterized in that one movable pressure device (4) is provided on one side of the panes (1) and that a device is provided for relative movement of the pressure device (4) at an adjustable rate.

12. Apparatus according to claim 10 or 11, characterized in that the pressure device or devices (4; 4, 4) extend over the whole width of the glass pane.

13. Apparatus according to one of claims 10 to 12 with at least one movable radiation source, characterized in that the one or more radiation sources (7) are mounted between two or more cylinders (4') of the pressure devices (4, 4).

14. Apparatus according to one of claims 10 to 12, characterized in that a heating source is provided in the pressure device or pressure devices (4, 4).

15. Apparatus according to one of the preceding claims, characterized in that the pressure devices (4, 4) are rotatably mounted cylinders (4'), rollers or flexible hoses filled with fluid, the pressure effect of which is selectively controllable hydraulically, pneumatically or mechanically, or that the pressure devices (4, 4) comprise units developing air cushions.

**Revendications**

1. Procédé de préparation d'une couche de matière synthétique (3) entre deux plaques de verre (1) disposées verticalement ou de manière inclinée, dans lequel la matière synthétique est introduite sous forme liquide entre les deux plaques de verre (1) qui sont maintenues parallèlement à leurs bords extérieurs et sont rendues étanches, et un durcissage de la matière synthétique est effectué dans le sens de la montée du niveau de remplissage, caractérisé en ce que les plaques (1) sont, par la pression hydrostatique de la matière synthétique liquide, pressées contre des dispositifs de pressage (4, 4; 4', 6) et en ce qu'au moins un dispositif de pressage (4) effectue, avec la zone de durcissage de la matière synthétique (3), un mouvement relatif par rapport aux plaques de verre (1).

2. Procédé suivant la revendication 1 pour un matière synthétique durcissable par un rayonnement intense d'une source de rayonnement, caractérisé en ce qu une ou plusieurs sources de rayonnement (7) sont déplacées conjointement au dispositif de pressage (4) ou aux dispositifs de pressage (4, 4),

3. Procédé suivant l'une des revendications 1 et 2, caractérisé en ce que, à une vitesse de déplacement prédéterminée du ou des dispositifs de pressage (4; 4, 4), la vitesse d'introduction de la matière synthétique est adaptée à cette dernière.

4. Procédé suivant l'une des revendications 1 et 2, caractérisé en ce que, à une vitesse d'introduction prédéterminée de la matière synthétique, la vitesse de déplacement du ou des dispositifs de pressage (4; 4, 4) est adaptée à cette dernière,

5. Procédé suivant la revendication 1, caractérisé en ce que la matière synthétique (3) est durcissable par la chaleur et en ce que l'apport de chaleur est effectué par l'intermédiaire du ou des dispositifs de pressage (4; 4, 4).

6. Procédé suivant l'une des revendications 1, 2 et 5, caractérise en ce que le ou les dispositifs de pressage (4; 4, 4) et/ou les sources de rayonnement (7) ne sont pas déplacées et sont stationnaires et en ce que les plaques (1) sont guidées de manière inclinée ou verticale à travers l'agencement du ou des dispositifs de pressage.

7. Procédé suivant l'une des revendications précédentes, caractérisé en ce que le liquide est, à l'aide d'un conduit flexible entraîné, introduit dans l'espace intermédiaire entre les plaques (1) dans la zone du niveau de liquide supérieur sans mouiller auparavant les plaques de verre (1).

8. Procédé suivant l'une des revendications précédentes, caractérisé en ce que, en une étape de fabrication, plusieurs couches sont préparées entre plusieurs plaques agencées l'une derrière l'autre pour la formation d'une plaque de verre composite multiple.

9. Procédé suivant l'une des revendications précédentes, caractérisé en ce que, après la préparation d'une ou de plusieurs couches de matière synthétique entre deux ou plusieurs plaques de verre, une ou plusieurs autres couches de matière synthétique sont préparées par rapport à une ou plusieurs autres plaques de verre ou respectivement plaques de verre composites.

10. Dispositif pour la mise en oeuvre du procédé suivant l'une des revendications 1 à 9, caractérisé en ce que, des deux côtés des plaques (1), sont prévus des dispositifs de pressage déplaçables (4, 4) et en ce qu'un dispositif de déplacement relatif des dispositifs de pressage (4, 4) et/ou des plaques (1) est prévu a une vitesse réglable.

11. Dispositif pour la mise en oeuvre du procédé suivant l'une des revendications 1 à 9, caractérisé en ce que, d'un côté des plaques (1), est prévu un dispositif de pressage déplaçable (4) et en ce qu'un dispositif de déplacement relatif du dispositif de pressage (4) est prévu à une vitesse réglable.

12. Dispositif suivant l'une des revendications 10 et 11, caractérisé en ce que le ou les dispositifs de pressage (4; 4, 4) s'étendent sur toute la largeur des plaques de verre.

13. Dispositif suivant l'une des revendications 10 à 12, comprenant au moins une source de rayonnement déplaçable, caractérisé en ce que la ou les sources de rayonnement (7) sont agencées entre deux ou plusieurs cylindres (4') des dispositifs de pressage (4, 4).

14. Dispositif suivant l'une des revendications 10 à 12, caractérisé en ce qu'une source de chaleur est prévue dans le ou les dispositifs de pressage (4, 4).

15. Dispositifs suivant l'une des revendications précédentes, caractérisés en ce que les dispositifs de pressage (4, 4) sont des cylindres (4'), des rouleaux ou des conduits flexibles remplis de liquide qui sont supportés de manière à pouvoir tourner et qui sont réglables de manière sélective dans leur effet de pressage par voie hydraulique, pneumatique ou mécanique, ou en ce que les dispositifs de pressage (4, 4) présentent des appareils formant des coussins d'air.

FIG. 1

FIG. 2

FIG. 3